# EUROPÄISCHE PATENTANMELDUNG

(11) **EP 4 060 012 A1**
(43) Veröffentlichungstag der Anmeldung: **21.09.2022**
(21) Anmeldenummer: 22153286.4
(22) Anmeldetag: 25.01.2022
(51) Int. Cl.: C12C 7/22, C12C 13/00, C12C 13/02, F25D 17/02, F28D 20/02, F28D 9/00

(54) **ENERGIERÜCKGEWINNUNG IN EINER ANLAGE ZUR GETRÄNKEHERSTELLUNG**

(30) Priorität: 17.03.2021 DE 102021106529
(71) Anmelder: KRONES Aktiengesellschaft, 93073 Neutraubling (DE)
(72) Erfinder: KAMMERLOHER, Helmut, 93073 Neutraubling (DE); FRIEDRICH, Michael, 93073 Neutraubling (DE); PROEHL, Christian, 93073 Neutraubling (DE); SCHUBERT, Kristian, 93073 Neutraubling (DE)
(74) Vertreter: Grünecker Patent- und Rechtsanwälte PartG mbB

(57) **Zusammenfassung**

Die vorliegende Erfindung betrifft ein Verfahren zur Energierückgewinnung in einer Anlage zur Getränkeherstellung, mit den Schritten: Leiten eines ersten Mediums mit einer ersten Temperatur in einen Kaltwassertank, wobei die erste Temperatur maximal 35 °C beträgt, Rückgewinnen thermischer Energie von einer ersten Vorrichtung der Anlage zur Getränkeherstellung und Zuführen der rückgewonnenen thermischen Energie zu lediglich einem ersten Teilbereich des Kaltwassertanks, derart dass in diesem ersten Teilbereich ein zweites Medium mit einer zweiten von der ersten Temperatur verschiedenen Temperatur, insbesondere ein gegenüber dem ersten Medium erwärmtes zweites Medium mit einer zweiten Temperatur oberhalb der ersten Temperatur, bereitgestellt wird, wobei die zweite Temperatur maximal 50 °C beträgt.

## Beschreibung

### Gebiet der Erfindung

Die vorliegende Erfindung betrifft die Energierückgewinnung bei der Herstellung von Getränken und insbesondere beim Bierbrauen.

### Stand der Technik

Bei der Getränkeherstellung ist ein wesentlicher Kostenfaktor der Energieverbrauch verschiedener Aufheiz- und Abkühlvorgänge. Daher sind im Stand der Technik verschiedene Ansätze zur Energierückgewinnung bekannt. Vorrichtungen zur Energierückgewinnung sind jedoch ihrerseits oft aufwändig und kostenintensiv und werden daher insbesondere, wenn nur relativ geringe Energiemengen zurückgewonnen werden können, eher selten eingesetzt. Ein Beispiel hierfür ist die Kondensatkühlung eines Pfannendunstkondensators relativ kleiner Sudanlagen, für den eine umfassende Energierückgewinnung allgemein oft als nicht lohnend angesehen wird. Insbesondere besteht das Vorurteil, dass die Energierückgewinnung auf niedrigem Temperaturniveau oder für geringe Energiemengen prinzipiell unrentabel sei.

Weiterhin wird Kühlenergie beziehungsweise Abwärme aus beispielsweise Turbokompressoren mangels Niedertemperaturverbraucher (zum Beispiel in Brauereien) oft nicht genutzt, sondern über Dach mittels Kühlgeräten an die Umgebung abgeführt oder in Kühlwasser (d.h. Wasser, welches zur Kühlung von beispielsweise Kompressoren, zum Beispiel Turbokompressoren oder Luftkompressoren, verwendet wurde) gespeichert und über ein Abwassersystem ungenutzt abgeleitet.

Angesichts des beschriebenen Stands der Technik liegt der vorliegenden Erfindung die Aufgabe zugrunde, Techniken für eine verbesserte Energierückgewinnung bei der Getränkeherstellung, insbesondere eine verbesserte Energierückgewinnung in einer Brauerei, bereitzustellen, wodurch insbesondere eine Reduktion des CO₂-Ausstoßes aus fossilen Energiequellen erreicht werden kann.

### Beschreibung der Erfindung

Die oben genannte Aufgabe wird durch ein Verfahren zur Energierückgewinnung in einer Anlage zur Getränkeherstellung (beispielsweise einer Brauerei) gelöst, das die Schritte umfasst:
Leiten eines ersten Mediums (beispielsweise Frischwasser oder Brauwasser oder Brauchwasser) mit einer ersten Temperatur in einen Kaltwassertank, wobei die erste Temperatur maximal 35 °C, (oder beispielsweise maximal 30°C oder auch nur maximal 25 °C oder 20 °C), beträgt;

Rückgewinnen (Rekuperation) thermischer Energie (mit einer Temperatur, die von der ersten Temperatur verschieden ist, insbesondere größer als die erste Temperatur sein kann), von (zumindest) einer ersten Vorrichtung der Anlage zur Getränkeherstellung; und

Zuführen der rückgewonnenen thermischen Energie zu lediglich einem ersten Teilbereich des Kaltwassertanks, derart, dass in diesem ersten Teilbereich ein zweites Medium mit einer zweiten von der ersten Temperatur verschiedenen Temperatur, insbesondere ein gegenüber dem ersten Medium erwärmtes zweites Medium mit einer zweiten Temperatur oberhalb der ersten Temperatur, bereitgestellt wird, wobei die zweite Temperatur maximal 50 °C oder maximal 40 °C beträgt.

Die erste Temperatur liegt beispielsweise oberhalb von 4 °C. Beispielsweise liegt die erste Temperatur in einem Bereich von 10 °C bis 15 °C. Je nach Region in der Welt kann die erste Temperatur auch unter 10 °C oder über 15 °C liegen.

Der in dem Verfahren verwendete Kaltwassertank ist von einem möglicherweise in der Anlage vorhandenen Energiespeichertank sowie einem möglicherweise in der Anlage vorhandenen Warm- oder Heißwassertank verschieden (etwa durch die Anlagentechnik wie vorgesehene Ein-/und Auslässe oder Zirkulationsleitungen).

Die rückgewonnene thermische Energie kann hierbei dem ersten Teilbereich des Kaltwassertanks in Form von Wärme zugeführt werden (die von einem Wärmeträgermedium transportiert und beispielsweise durch einen Wärmetauscher auf einen Teil des ersten Mediums übertragen wird) und das zweite Medium ein Teil des mithilfe der zugeführten Wärme erwärmten ersten Mediums sein. So kann das erste Medium Kaltwasser sein und das zweite Medium gegenüber diesem Kaltwasser durch die rückgewonnene thermische Energie erwärmtes Kaltwasser sein. Es kann aber auch die rückgewonnene thermische Energie in (mit) dem zweiten Medium (das die thermische Energie außerhalb des Kaltwassertanks aufnimmt) in den Kaltwassertank eingeführt werden. Die rückgewonnene thermische Energie kann also in Form von Wärme oder als wärmetragendes Medium zur weiteren Nutzung in den Kaltwassertank eingeführt und in dem Kaltwassertank zwischengespeichert werden.

Dem ersten Teilbereich kann weitere von einer oder mehreren weiteren Vorrichtungen der Anlage rückgewonnene thermische Energie zugeführt werden, wobei der erste Teilbereich mehrere, nicht notwendigerweise aneinander angrenzende, Teilbereiche umfassen kann, in denen Schichten des zweiten Mediums mit verschiedenen Temperaturen unterhalb der oben genannten Maximaltemperatur gespeichert sein können. Insbesondere kann der erste Teilbereich ein oberer Bereich des Kaltwassertanks sein.

Erfindungsgemäß wird durch den Kaltwassertank (und insbesondere den ersten Teilbereich desselben), zumindest zeitweise, eine Energiesenke bereitgestellt, die rückgewonnene thermische Energie aufzunehmen und für die weitere Verwendung bereitzustellen vermag. Die so wiederverwendbare thermische Energie kann eine relativ niedrige Temperatur (wenngleich, beispielsweise, höher als die erste Temperatur) aufweisen. Aufgrund des Bereitstellens des Kaltwassertanks als Energiesenke zur Aufnahme der rekuperativen thermischen Energie lohnt sich auch die Zwischenspeicherung relativ geringer thermischer Energiemengen und auch die Rekuperation von relativ niedrigen Temperaturen. So können Medien, die relative kleine Wärmemengen und/oder Temperaturen transportieren auch zur Energierückgewinnung genutzt werden (zum Beispiel ein Medium zwar mit einem hohen Temperaturniveau jedoch mit einem geringen Volumen). Weiterhin wird es so auch möglich und rentabel, thermische Energie im Gesamtsystem zurückzuhalten und wiederzuverwenden, die bisher auf Grund eines zu geringen Temperaturniveaus nicht rekuperiert wird. Somit kann der CO₂-Ausstoß aus fossilen Energiequellen verringert werden.

Beispielsweise kann das Kondensat, das in einem Pfannendunstkondensator (beispielhaft als erste Vorrichtung) durch Kondensation entsteht, zur Rekuperation beispielsweise vollständig, genutzt werden. Auch kann so die Abwärme eines Kompressors (zum Beispiel eines Kältekompressors oder Luftkompressors) oder einer Klimaanlage (zum Beispiel von Klimaanlagen, welche zur Klimatisierung von Anlagen oder Anlagenräumen oder Maschinenräumen oder Räumen für Schaltschränke verwendet werden) beispielhaft als erste Vorrichtung wiederverwendet werden. Ebenso können Abwässer, insbesondere relativ kühle Abwässer, die ansonsten ungenutzt in die Kanalisation abgeleitet werden, zur Rekuperation genutzt werden. Die Abwässer können hierbei bis zu der Position in thermisch isolierten Leitungen oder thermisch isolierten Abwasserkanälen transportiert werden, an der die von ihnen transportierte thermische Energie zurückgewonnen wird. Auch können diese Abwässer vor einer Rekuperation gesammelt und vorgehalten werden - so kann auch durch konstantere Flüsse eine gleichmäßigere Rekuperation bewerkstelligt werden. Dafür dass Energie nicht unnötigerweise in die Umgebung beziehungsweise Atmosphäre gelangt und so nicht mehr zur Energierückgewinnung zur Verfügung steht, ist es vorteilhaft, wenn alle Leitungen beziehungsweise möglichst viele Leitungen bis zur Energierückgewinnung thermisch isoliert werden; so kann noch eine höhere Energierückgewinnungseffizienz geschaffen werden. Ebenso kann vorgesehen sein, das aus dem ersten Teilbereich des Kaltwassertanks gelieferte zweite Medium außerhalb des Kaltwassertanks mithilfe von von Abwässern transportierter thermischer Energie, beispielsweise über einen Wärmetauscher und/oder einer Wärmepumpe, weiter zu erwärmen.

Das Verfahren kann weiterhin den Schritt des Ausleitens des zweiten Mediums aus einem ersten Auslass des ersten Teilbereichs des Kaltwassertanks und Zuführen des ausgeleiteten zweiten Mediums zu einer zweiten Vorrichtung der Anlage zur Getränkeherstellung, die von der ersten Vorrichtung verschieden ist, umfassen. So kann die in dem zweiten Medium gespeicherte rückgewonnene thermische Energie in der zweiten Vorrichtung nach der Zwischenspeicherung in dem Kaltwassertank weiterverwendet werden. Beispielsweise kann das zweite Medium erwärmtes Kaltwasser sein, das beispielsweise in einer Brauerei zum Einmaischen, Anschwänzen, Ausschieben, Spülen oder Reinigen, gegebenenfalls in Verbindung mit zusätzlichem Warmwasser, verwendet werden kann. Die oben genannte zweite Vorrichtung kann ein Maischgefäß, Maischefilter, Läuterbottich, eine Wasserentgasungsanlage, Flaschenreinigungsmaschine oder eine Reinigungsanlage (zum Beispiel eine Cleaning-in-Place-Reinigungsanlage) beziehungsweise jeglicher Kaltwasserverbraucher mit Verbindung zum Kaltwassertank einer Brauerei oder einer Anlage zur Getränkeherstellung und/oder Getränkeabfüllung sein.

Das Verfahren kann weiterhin den Schritt des Ausleitens des ersten Mediums aus einem zweiten Auslass eines zweiten Teilbereichs des Kaltwassertanks, der von dem ersten Teilbereich verschieden ist, und Zuführen des ausgeleiteten ersten Mediums zu einer dritten Vorrichtung der Anlage zur Getränkeherstellung, die von der ersten Vorrichtung und der zweiten Vorrichtung verschieden ist, umfassen. Es können auch im ersten Teilbereich des Kaltwassertanks mehr als ein erster Auslass an verschiedenen Höhen und/oder im zweiten Teilbereich des Kaltwassertanks mehr als ein zweiter Auslass an verschiedenen Höhen vorgesehen sein. Beispielsweise wird zur Würzekühlung ein relativ großes Volumen des Kaltwassers aus dem zweiten Teilbereich abgezogen, sodass der Pegel (d.h. der Flüssigkeitsfüllstand) insgesamt im Kaltwassertank deutlich sinken kann (wenn zeitgleich nicht genügend Wasser in Tank zugeführt wird), sodass eventuell kein Kaltwasser mehr aus dem ersten Teilbereich über einen relativ hoch angebrachten (oberhalb des abgesenkten Pegels) ersten Auslass abgezogen werden kann. Dieses kann dann über einen weiteren weiter unten (etwa auf oder unterhalb der Höhe eines Kalt-/Frisch-/Brau-/Brauchwassereinlasses) angebrachten ersten Auslass erfolgen. Der relativ hoch angebrachte erste Auslass kann oberhalb einer Zuleitung rekuperativer Wärmeenergie angeordnet sein. Das erste Medium kann Kaltwasser sein. Beispielsweise kann es in einer Brauerei zur Würzekühlung Verwendung finden. Die dritte Vorrichtung kann ein einer Würzepfanne oder Heißtrubabscheidung nachgeschalteter Würzekühler sein. Die dritte Vorrichtung kann auch eine Einrichtung zum Bereitstellen von Eiswasser oder eine Einrichtung zum Entgasen von Wasser sein.

Gemäß einer Weiterbildung kann rückgewonnene thermische Energie dem ersten Teilbereich des Kaltwassertanks von einer Wärmepumpe oder einen Wärmetauscher zugeführt werden. Wärmepumpen und Wärmetauscher stellen kostengünstige und/oder verlässlich arbeitende Wärmerückgewinnungseinrichtungen oder Teile davon dar. Der Wärmetauscher kann in oder an dem Kaltwassertank oder außerhalb desselben vorgesehen sein. Beispielsweise kann innerhalb des Tanks Wärme mithilfe einer Rohrwendel, beispielsweise einer im ersten Teilbereich horizontal angeordneten Rohrwendel mit einer oder mehreren Windungen, auf das im Tank gespeicherte Medium zum Bereitstellen des zweiten Mediums übertragen werden. Weiterhin kann der Wärmetauscher auch am Mantel (d.h. der Wand) des Tanks als Zargenheizfläche und/oder Zargenkühlfläche ausgebildet sein. In diesem Fall ist es besonders vorteilhaft, wenn die Zargenheiz- und/oder Zargenkühlfläche als sogenannte Pillow Plates-Fläche ausgeprägt ist. Bei Pillow Platesweist die Fläche, welche zum Produkt gerichtet ist (also zur Tankmitte gerichtet ist) Unebenheiten auf. Die Pillow Plates können innen und/oder außen am Tank zur Wärmeübertragung Verwendung finden. Die Zargenheiz- und/oder Zargenkühlfläche kann zum Beispiel auch in Form von aufgebrachten Halbrohrschlagen oder Winkeln ausgeprägt sein. Eine solche Zargenheiz- und/oder Zargenkühlfläche kann sich auch (mittig) im Tank befinden.

Die verschiedenen Weiterbildungen des erfindungsgemäßen Verfahrens können auch mit einer Kühlung des ersten Mediums (beispielsweise auf eine Temperatur zwischen 3 °C und 10°C) außerhalb des ersten Teilbereichs des Kaltwassertanks kombiniert werden. So kann flüssiges CO₂ durch eine in dem zweiten Teilbereich des Kaltwassertanks angeordnete Leitung geleitet werden, um das erste Medium in lediglich dem zweiten Teilbereich (durch die beim Übergang des flüssigen CO₂ in die gasförmige Phase entstehende Verdunstungskälte) abzukühlen (auf eine Temperatur unterhalb der ersten Temperatur). Alternativ kann ein anderes Kältemedium/Kälteträgermedium zur Kühlung des ersten Mediums außerhalb des ersten Teilbereichs des Kaltwassertanks Verwendung finden. So kann ein Getränk, beispielsweise Bier zum Beispiel aus dem Lagerkeller (beispielsweise welches sich auf dem Weg zur Abfüllung befindet) oder nach der Filtration, zur Kühlung des ersten Mediums außerhalb des ersten Teilbereichs des Kaltwassertanks Verwendung finden. Weiterhin kann eine Kälteanlage dazu eingesetzt werden, das erste Medium außerhalb des ersten Teilbereichs des Kaltwassertanks zu kühlen oder ein entsprechend abgekühltes erstes Medium (beziehungsweise eine Teilmenge davon) zum Einleiten in den Kaltwassertank bereitzustellen. Weiterhin kann eine Kälteanlage dazu eingesetzt werden, das erste Medium in dem zweiten Teilbereich des Kaltwassertanks zu kühlen. Durch die genannten Verfahren lässt sich beispielsweise Eiswasser herstellen. Alternativ kann Eiswasser (das außerhalb des Kaltwassertanks gekühlt wurde) zusätzlich zu dem Kaltwasser direkt in den Kaltwassertank eingeleitet werden. So kann in einem unteren Bereich des Kaltwassertanks Eiswasser, in einem mittleren Bereich gegenüber dem Eiswasser wärmeres Kaltwasser und in einem oberen Bereich gegenüber dem Kaltwasser des mittleren Bereichs wärmeres Kaltwasser gespeichert werden. Je nach Ausprägung/Auslegung des Kaltwassertanks beziehungsweise der Anlage kann auf die separate Bereitstellung eines Eiswassertanks (etwa in einer Brauerei) verzichtet werden.

Wenn eine Kühlung eines Teilbereichs des Kaltwassertanks mit flüssigem CO₂ vorgesehen ist, kann zumindest ein Teil der thermischen Energie, die von der ersten Vorrichtung stammt, dazu verwendet werden, unterhalb der Kontaktflächen zur Kälteübertragung von dem verdampfenden CO₂ auf das Kaltwasser in das Kaltwasser eingebracht zu werden, um das zu kühlende Kaltwasser lokal in Bewegung zu versetzen, wodurch einer Eisbildung an den Kontaktflächen zur Kälteübertragung entgegengewirkt werden kann.

Die oben genannte Aufgabe wird auch durch Bereitstellen einer Anlage zur Getränkeherstellung, insbesondere Bierherstellung, gelöst, die einen Kaltwassertank, (zumindest) eine Wärmerückgewinnungseinrichtung zur Rückgewinnung thermischer Energie (von einer Vorrichtung der Anlage) und eine Steuerungs-/Regeleinrichtung, die dazu ausgebildet ist, das Verfahren gemäß einem der oben beschriebenen Weiterbildungen auszuführen, umfasst.

Weiterhin wird die oben genannte Aufgabe durch Bereitstellen einer Anlage zur Bierherstellung gelöst, die umfasst:
einen Kaltwassertank mit einem ersten Teilbereich und einem zweiten Teilbereich, der von dem ersten Teilbereich verschieden ist, zum Speichern von Kaltwasser mit einer ersten Temperatur von maximal 35 °C (oder beispielsweise maximal 30 °C oder auch nur maximal 25 °C oder 20 °C), und beispielsweise mindestens 4 °C, in dem zweiten Teilbereich des Kaltwassertanks und zum Speichern von Kaltwasser mit einer zweiten Temperatur, die von der ersten Temperatur verschieden ist, insbesondere größer als die erste Temperatur ist, in dem ersten Teilbereich des Kaltwassertanks; und
eine Wärmerückgewinnungseinrichtung zur Rückgewinnung thermischer Energie von einer ersten Vorrichtung der Anlage zur Bierherstellung, wobei die Wärmerückgewinnungseinrichtung lediglich mit dem ersten Teilbereich des Kaltwassertanks verbunden ist, und die erste Vorrichtung ein Pfannendunstkondensator oder ein Kompressor (zum Beispiel ein Kältekompressor oder ein Luftkompressor) oder eine Klimaanlage ist oder die erste Vorrichtung ein Abwasser oder anderes Medium bereitstellt, aus dem die thermische Energie rückgewonnen wird. Die erste Vorrichtung ist dahingehend mit dem Kaltwassertank energetisch verbunden, dass thermische Energie, die von der ersten Vorrichtung bereitgestellt wird, dem Kaltwassertank zugeführt werden kann.

Der Kaltwassertank dient definitionsgemäß in der Anlage zum Speichern von Kaltwasser mit einer Temperatur von maximal 50 °C oder maximal 40 °C und ist von einem möglicherweise in der Anlage vorhandenen Energiespeichertank sowie einem möglicherweise in der Anlage vorhandenen Warm- oder Heißwassertank verschieden. Die oben genannte zweite Temperatur des Kaltwassers beträgt also maximal 50 °C oder maximal 40 °C. Die Anlage kann eine Temperaturmesseinrichtung zum Messen der Temperatur des Kaltwassers im Kaltwassertank (beispielsweise separat in unterschiedlichen Teilbereichen des Kaltwassertanks) und/oder beim Zuführen und/oder nach dem Verlassen des Kaltwassertanks umfassen.

Der Kaltwassertank dieser Anlage kann in dem ersten Teilbereich einen ersten Auslass zum Ausleiten des Kaltwassers aus dem ersten Teilbereich und einen zweiten Auslass zum Ausleiten des Kaltwassers aus dem zweiten Teilbereich und einen von dem ersten und dem zweiten Auslass verschiedenen Einlass zum Einleiten von Wasser (etwa Frisch-, Brau- oder Brauchwasser) umfassen.

Es können auch im ersten Teilbereich des Kaltwassertanks mehr als ein erster Auslass an verschiedenen Höhen und/oder im zweiten Teilbereich des Kaltwassertanks mehr als ein zweiter Auslass an verschiedenen Höhen vorgesehen sein.

In dem Kaltwassertank können auch Einbauten zum Einlagern und Auslagern von Kaltwasser und Eiswasser vorhanden sein. Die Einbauten können eine oder mehrere Ladelanzen, beispielsweise ein oder mehrere Lochblechrohre oder gelochte Rohre oder Variationen beispielsweise mit Schlitzen, jedoch in jeder Ausführung mit geeignetem Strömungsverhalten, umfassen.

Der Kaltwassertank dieser Anlage umfasst gemäß einer Weiterbildung einen Wärmetauscher außerhalb oder innerhalb eines den ersten Teilbereich umgebenden Wandbereichs des Kaltwassertanks. Alternativ oder zusätzlich können ein oder mehrere Wärmetauscher oder Wärmepumpen dem Kaltwassertank vor- und/oder nachgeschaltet vorgesehen sein.

Weiterhin kann die Anlage eine Einrichtung zum Zuführen von einem Kältemedium/Kälteträgermedium, beispielsweise flüssigem CO₂ oder Bier, umfassen, und es kann der Kaltwassertank eine in dem zweiten Teilbereich angeordnete Leitung umfassen, die mit der Einrichtung zum Zuführen des Kältemediums/Kälteträgermediums verbunden ist. Gemäß einer weiteren Weiterbildung umfasst die Anlage eine Kälteanlage zum Kühlen des in dem Kaltwassertank zu speichernden Kaltwassers außerhalb des Kaltwassertanks und/oder eine Kälteanlage zum Kühlen des Kaltwassers in dem zweiten Teilbereich des Kaltwassertanks.

Im Folgenden werden Ausführungsformen eines erfindungsgemäßen Verfahrens unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht ein Verfahren zur Energierückgewinnung in einer Anlage zur Getränkeherstellung gemäß einer Ausführungsform der vorliegenden Erfindung.
Figur 2 veranschaulicht einen Kaltwassertank zur Verwendung für ein Verfahren zur Energierückgewinnung in einer Anlage zur Getränkeherstellung gemäß einer Ausführungsform der vorliegenden Erfindung.
Figur 3 veranschaulicht einen weiteren Kaltwassertank zur Verwendung für ein Verfahren zur Energierückgewinnung in einer Anlage zur Getränkeherstellung gemäß einer Ausführungsform der vorliegenden Erfindung.
Figur 4 veranschaulicht eine Anlage zur Getränkeherstellung gemäß einer Ausführungsform der vorliegenden Erfindung.
Figur 5 veranschaulicht eine Konfiguration zur Energierückgewinnung aus Abwasser zur Vorwärmung von Wasser.

Es werden Techniken zur Rückgewinnung thermischer Energie bei der Getränkeherstellung, insbesondere beim Bierbrauen, bereitgestellt. Ein Kaltwassertank dient erfindungsgemäß als Energiesenke, in der thermische Energie, die von einer Vorrichtung einer Anlage zur Getränkeherstellung wiedergewonnen wird, zwischengespeichert werden kann. Die thermische Energie kann mithilfe eines Wärmetauschers auf ein in einem Teilbereich des Kaltwassertanks gespeichertes Medium übertragen werden, oder sie kann mithilfe eines Wärmetauschers oder einer Wärmepumpe auf ein Medium übertragen werden, das dann in dem Teilbereich des Kaltwassertanks gespeichert wird.

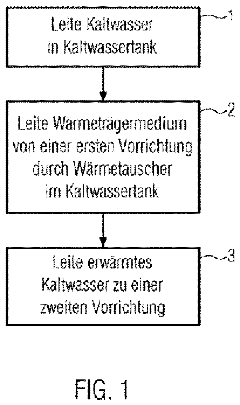

Eine Ausführungsform eines erfindungsgemäßen Verfahrens zur Energierückgewinnung in einer Anlage zur Getränkeherstellung, insbesondere in einer Brauerei, ist in Figur 1 veranschaulicht. Kaltwasser wird in einen Kaltwassertank geleitet 1. Bei dem Kaltwasser kann es sich um Frischwasser oder Brauwasser oder Brauchwasser handeln. Frischwasser ist Wasser, welches zum Beispiel aus einer (eigenen) Quelle, einem (eigenen) Brunnen oder Oberflächengewässer (beispielsweise See oder Fluss) stammt; es kann auch von einem Wasserversorger stammen. Das Frischwasser kann unbehandelt zum Beispiel direkt von einer Quelle oder Brunnen stammen oder es kann mittels Wasseraufbereitung aufbereitet werden (biologisch durch Abtötung von Keimen z. B. durch UV-Strahlen und/oder chemisch/technisch beispielsweise zur Reduzierung der Karbonathärte durch eine Kalkfällungsanlage). Das Wasser wird dann als Brauwasser (zur Herstellung von Bier oder anderen Getränken, sprich Wasser welches in das Produkt eingeht) oder Brauchwasser (Wasser zum Beispiel zum Spülen oder Reinigen von Behälter und Leitungen zur Bier- oder Getränkeherstellung, sprich Wasser, welches nicht in das Produkt eingeht, jedoch jegliches Wasser ist, welches in der Brauerei- oder Getränkeherstellung verwendet wird, also zum Beispiel auch Wasser, welches als Wärmeträgermedium in einem Energiespeichertank eingesetzt wird) verwendet. Bei Brauwasser kann es sich prinzipiell auch um Brauchwasser handeln (d.h. Brauwasser kann beispielsweise auch für die Reinigung beispielsweise für Behälter oder Leitungen verwendet werden, beziehungsweise, wenn Brauchwasser die erforderliche Wasserqualität aufweist, kann Brauchwasser auch als Brauwasser, also zur Herstellung von Bier oder Getränken verwendet werden); denkbar ist auch, dass das Wasser erst nach dem Kaltwassertank aufbereitet oder zusätzlich nochmals aufbereitet wird. Möglich ist auch, dass das Abwasser in einer Brauerei und/oder in einem Getränkeherstellungsbetrieb so aufbereitet wird, dass es wieder als Frischwasser eingespeist werden kann.

Die Temperatur des in den Kaltwassertank eingeleiteten Kaltwassers beträgt maximal 35 °C oder 30 °C oder auch nur maximal 25 °C oder 20 °C, und sie liegt beispielsweise oberhalb von 4 °C. Beispielsweise kann sie zwischen 10° C und 15 °C liegen. Die Temperatur des Kaltwassers im Kaltwassertank oder bei Zuführen beziehungsweise nach Verlassen des Kaltwassertanks kann durch eine geeignete Temperaturmesseinrichtung gemessen werden. Ein Wärmemedium/Wärmeträgermedium, etwa Wasser oder Wasserdampf, das von einer ersten Vorrichtung der Anlage geliefert wird, wird durch einen im (oder am) Kaltwassertank angebrachten Wärmetauscher geleitet 2. Das durch den Wärmetauscher geleitete Wärmeträgermedium kann alternativ ein Medium sein, das durch eine Übertragung von Wärme von dem von der ersten Vorrichtung der Anlage gelieferten Medium (etwa durch einen weiteren Wärmetauscher) erwärmt wurde. Der Wärmetauscher ist in einem oberen Teilbereich (ersten Teilbereich) des Kaltwassertanks vorgesehen und führt zu einer Erwärmung des Kaltwassers im oberen Teilbereich auf eine Temperatur von maximal 50 °C.

Es sei erwähnt, dass prinzipiell alternativ vorgesehen sein kann, ein Kältemedium/Kälteträgermedium statt eines Wärmemediums/Wärmeträgermediums vorzusehen, sodass Kälte statt Wärme in den Kaltwassertank eingespeichert werden kann.

Je nach Wahl der ersten Vorrichtung kann die in das Kaltwasser im oberen Teilbereich des Kaltwassertanks eingetragene thermische Energie eine pro Zeiteinheit gelieferte relativ geringe Energiemenge oder eine Energie mit relativ geringer Temperatur, wenngleich beispielsweise höherer Temperatur als derjenigen des in Schritt 1 in den Kaltwassertank eingeleiteten Kaltwassers, sein. Auch kann die thermische Energie aus einem von der ersten Vorrichtung gelieferten Abwasser gewonnen werden. Selbstverständlich kann thermische Energie von mehreren (ersten) Vorrichtungen als Quellen rekuperativer Energie dem oberen Teilbereich (der mehrere Teilbereiche umfassen kann) des Kaltwassertanks zugeführt werden. Hierbei können für die verschiedenen Quellen rekuperativer Energie verschiedene Wärmetauscher in beziehungsweise an dem Kaltwassertank oder außerhalb des Kaltwassertanks oder Wärmepumpen Verwendung finden.

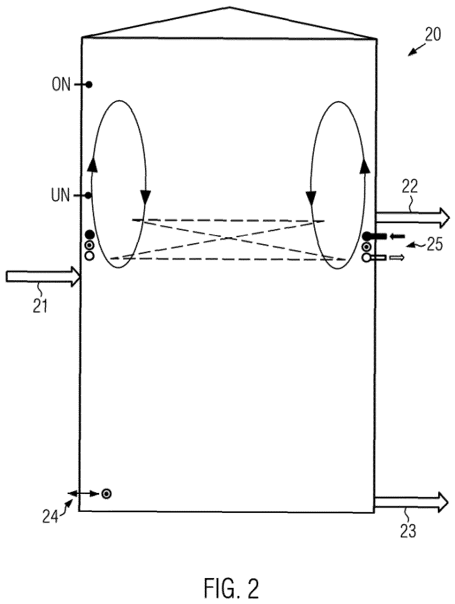

Figur 2 zeigt einen Kaltwassertank 20, der in dem in Figur 1 veranschaulichten Verfahren Verwendung finden kann. Der Kaltwassertank 20 umfasst einen Einlass 21 zum Einleiten von Kaltwasser und einen ersten Auslass 22 in einem oberen (ersten) Teilbereich des Kaltwassertanks 20 und einem zweiten Auslass 23 in einem unteren (zweiten) Teilbereich des Kaltwassertanks 20. Im unteren Bereich des Kaltwassertanks 20, beispielsweise in der Nähe des Bodens oder am Boden, ist eine Druck- und/oder Flüssigkeitsniveau-Messeinrichtung 24 vorgesehen. Eine Flüssigkeitsniveau-Messeinrichtung kann sich zusätzlich oder alternativ auch in der Zarge des Tanks befinden. Wenn die Füllmenge in dem Kaltwassertank 20 nach Ausleiten des Wassers aus dem ersten Auslass 22 und/oder zweiten Auslass 23 unter ein unteres Niveau UN fällt, kann ein geregeltes Einleiten von Wasser durch den geöffneten Einlass 21 veranlasst werden, beispielsweise bis ein oberes Niveau ON des Füllstands erreicht.

Weiterhin umfasst der Kaltwassertank 20 einen Wärmetauscher 25, beispielsweise eine horizontal angeordnete Rohrwendel mit einer oder mehreren Windungen. Ein oder mehrere andere Wärmetauscher oder Wärmetauschvorrichtungen, wie etwa Pillow Plates, können alternativ oder zusätzlich in oder am Kaltwassertank 20 vorgesehen sein. Durch den Wärmetauscher 25 kann Wärme auf das Kaltwasser lediglich im oberen Teilbereich des Kaltwassertanks 20 übertragen werden. Gemäß Schritt 2 des in Figur 1 gezeigten Verfahrens kann ein Wärmeträgermedium durch den Wärmetauscher 25 geleitet werden, das von einer ersten Vorrichtung der Anlage stammt oder von einem Wärmeträgermedium dieser ersten Vorrichtung erwärmt wurde.

Im unteren Teilbereich des Kaltwassertanks 20 wird Kaltwasser beispielsweise zur Verwendung für eine Würzekühlung oder zum Bereiten von Eiswasser oder zum Bereiten von entgastem Wasser vorgehalten. Dieser untere Teilbereich bleibt von der Wärmerekuperation über den Wärmetauscher 25 unbeeinflusst. Im oberen Teilbereich wird eine Wasserschicht oberhalb der unteren Kaltwasserschicht erwärmt. In einem Wärmeübergangsbereich in der Umgebung des Wärmetauschers 25 steigt erwärmtes Kaltwasser auf, wie es durch die Pfeile in Figur 2 angedeutet ist, und bildet so eine Schicht erwärmten Kaltwassers.

In dem unteren von der Wärmerekuperation unbeeinflussten Teilbereich des Kaltwassertanks kann beispielsweise ein Volumen an Kaltwasser oder Eiswasser vorgehalten werden, das zur Würzekühlung mindestens eines Suds oder von mindestens eineinhalb Suden ausreicht.

Alternativ kann zu Beginn der Würzekühlung von beispielsweise mindestens einem oder mindestens eineinhalb Suden nur ein Teil des zur Kühlung von dem mindestens einen oder mindestens eineinhalb Suden benötigten Volumens an Kaltwasser oder Eiswasser im Kaltwassertank vorliegen und der restliche benötigte Teil im Verlauf der Würzekühlung im Kaltwassertank erzeugt (durch weiteres Einleiten von Kaltwasser oder Eiswasser und/oder Kühlen von Kaltwasser) und aus dem Kaltwassertank zur Würzekühlung ausgelassen werden. So wird es beispielsweise ermöglicht, eine Kälteanlage, die zur Erzeugung von Eiswasser (innerhalb und/oder außerhalb des Kaltwassertanks) verwendet wird, mit gleichmäßiger Last zu betreiben. Gemäß einer anderen Alternative liegt zu Beginn der Würzekühlung bereits das gesamte benötige Volumen an Eiswasser vor

Gemäß Schritt 3 des in Figur 1 gezeigten Verfahrens wird das erwärmte Kaltwasser zu einer zweiten Vorrichtung geleitet 3, wobei die Wärme, die von der ersten Vorrichtung stammt und in dem Kaltwassertank, beispielsweise dem Kaltwassertank 20, der in Figur 2 gezeigt ist, zwischengespeichert wurde, wieder genutzt werden kann.

Das Verfahren kann zur Rückgewinnung thermischer Energie in einer Brauerei ausgeführt werden. Der Kaltwassertank kann zum Speichern von Frischwasser oder Brauwasser oder Brauchwasser dienen. Die erste Vorrichtung kann hierbei ein Pfannendunstkondensator oder ein Kompressor (zum Beispiel ein Kältekompressor oder ein Luftkompressor) oder eine Klimaanlage sein, und die zweite Vorrichtung kann hierbei ein Maischgefäß, Maischefilter, Läuterbottich, eine Wasserentgasungsanlage, eine Flaschenreinigungsmaschine oder eine Reinigungsanlage (zum Beispiel eine Cleaning-in-Place-Reinigungsanlage) beziehungsweise jeglicher Kaltwasserverbraucher mit Verbindung zum Kaltwassertank einer Brauerei oder einer Anlage zur Getränkeherstellung und/oder Getränkeabfüllung sein.

In einer alternativen Ausführungsform wird ein Teil des in dem Kaltwassertank einzulagernden Kaltwassers außerhalb des Kaltwassertanks durch die von der ersten Vorrichtung stammende thermische Energie erwärmt und dann in den oberen Teilbereich des Kaltwassertanks geleitet. In diesem Fall weist der in Figur 2 gezeigte Kaltwassertank 20 einen zusätzlichen Einlass im oberen Teilbereich auf (nicht gezeigt), über den das außerhalb des Kaltwassertanks 20 erwärmte Kaltwasser eingeleitet werden kann.

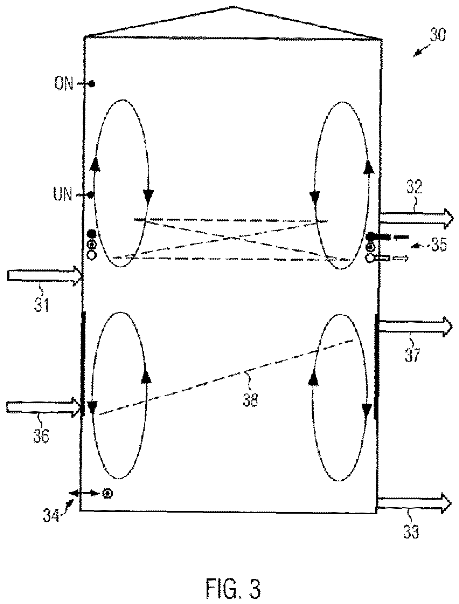

Die rekuperative Erwärmung von Kaltwasser in einem oberen Teilbereich eines Kaltwassertanks kann mit einer Kühlung von Kaltwasser in einem unteren Teilbereich des Kaltwassertanks kombiniert werden. Die Kühlung kann mithilfe flüssigem CO₂ oder kaltem Bier, etwa aus dem Lagerkeller, erfolgen. Sie kann auch mithilfe einer Kälteanlage erfolgen. Beispielsweise zeigt Figur 3 einen Kaltwassertank 30, mithilfe dessen eine solche Kombination realisiert werden kann. Der Kaltwassertank 30 ist dem Kaltwassertank 20, der in Figur 2 gezeigt ist, dahingehend ähnlich, dass er einen Einlass 31 zum Einleiten von Kaltwasser und mindestens einen ersten Auslass 32 in einem oberen (ersten) Teilbereich und mindestens einem zweiten Auslass 33 in einem unteren (zweiten) Teilbereich sowie eine Druck- und/oder Flüssigkeitsniveau-Messeinrichtung 34 umfasst (auch wenn nicht dargestellt so kann sich eine Flüssigkeitsniveau-Messeinrichtung auch in der Zarge befinden). Wenn die Füllmenge in dem Kaltwassertank 30 nach Ausleiten des Wassers aus dem ersten Auslass 32 und/oder zweiten Auslass 33 unter ein unteres Niveau UN fällt, kann ein geregeltes Einleiten von Wasser durch den geöffneten Einlass 31 veranlasst werden, beispielsweise bis ein oberes Niveau ON des Füllstands erreicht wird.

In dem ersten und/oder zweiten Teilbereich können jeweils mehr als ein Auslass vorgesehen sein. Wenn der Füllstand im Kaltwassertank 30 kurzfristig stark sinkt, weil beispielsweise Würze gekühlt wird und folglich über den Auslass 33 ein großes gespeichertes Wasservolumen abgezogen wird, kann der in Figur 3 gezeigte Auslass 32 oberhalb des resultierenden Pegels im_Kaltwassertank 30 liegen. Ein weiter unten angebrachter weiterer Auslass (nicht dargestellt) in dem oberen (ersten) Teilbereich kann dann dem Ausleiten des Kaltwassers aus diesem Teilbereich dienen. Wenn der Pegel entsprechend stark absinkt, kann auch vorgesehen sein, dass das zuvor im ersten Teilbereich gespeicherte Kaltwasser aus dem zweiten Auslass 33 ausgelassen und der zweiten Vorrichtung zugeleitet wird.

Weiterhin umfasst auch der Kaltwassertank 30 einen Wärmetauscher 35, beispielsweise eine horizontal angeordnete Rohrwendel mit einer oder mehreren Windungen, durch den Wärme auf das Kaltwasser lediglich im oberen Teilbereich des Kaltwassertanks 30 übertragen werden kann. Andere Wärmetauschvorrichtungen, wie etwa Pillow Plates, können alternativ oder zusätzlich in oder am Kaltwassertank 30 vorgesehen sein.

Im Vergleich zu dem in Figur 2 gezeigten Kaltwassertank 20 umfasst der in Figur 3 gezeigte Kaltwassertank 30 zusätzlich einen CO₂-Einlass 36 und CO₂-Auslass 37. Über den CO₂-Einlass 36 kann flüssiges CO₂ in eine Leitung 38, beispielsweise eine Wendelleitung, die innerhalb des Kaltwassertanks 30 angeordnet ist, eingeleitet werden. In der Leitung 38 verdampft das CO₂ zumindest teilweise und durch die Verdampfung des CO₂ wird das die Leitung umgebende Kaltwasser, beispielsweise auf eine Temperatur zwischen 2 °C und 10 °C, abgekühlt. Das zumindest teilweise verdampfte CO₂ wird über den CO₂-Auslass 37 ausgeleitet. Anstelle des CO₂ kann ein beliebiges geeignetes anderes Kältemedium/Kälteträgermedium in die Leitung 38 eingelassen werden, beispielsweise Bier aus dem Lagerkeller oder Filtrationsanlage. Weiterhin kann alternativ oder zusätzlich vorgesehen sein, mithilfe einer Kälteanlage Kaltwasser in einem unteren Teilbereich des Kaltwassertanks 30 zu kühlen.

Bei dem in Figur 3 gezeigten Kaltwassertank 30 kann vorgesehen sein, dass zumindest ein Teil der zugeführten rekuperativen thermischen Energie unterhalb der Kontaktflächen zur Kälteübertragung auf das Kaltwasser eingebracht wird, um das zu kühlende Kaltwasser lokal in Bewegung zu versetzen, wodurch einer Eisbildung an den Kontaktflächen zur Kälteübertragung entgegengewirkt werden kann.

Gemäß einer weiteren Ausführungsform kann eine Anbindung des in den Figuren 2 und 3 gezeigten Kaltwassertanks 20 beziehungsweise 30 derart erfolgen, dass relativ kühles / gekühltes Kaltwasser / Eiswasser aus dem unteren Teilbereich des Kaltwassertanks 20, 30 einer Vorrichtung (beispielsweise einer Wärmepumpe oder Absorber-Kältemaschine oder einem Wärmetauscher oder Kompressor) zum Kühlen der Vorrichtung zugeführt wird, und das durch den Kühlvorgang der Vorrichtung erwärmte Kaltwasser dem Kaltwassertank 20, 30 im oberen (wärmeren) Teilbereich wieder zugeführt wird. Alternativ kann es auch weiteren Vorrichtungen und/oder Verbrauchern zugeführt werden. Ebenso kann derselben Vorrichtung aus dem oberen oder einem mittleren Teilbereich zugeführtes in dieser Vorrichtung gekühlte Kaltwasser dem Kaltwassertank 20, 30 im unteren Teilbereich desselben wieder zugeführt werden. Alternativ kann es auch weiteren Vorrichtungen und/oder Verbrauchern zugeführt werden.

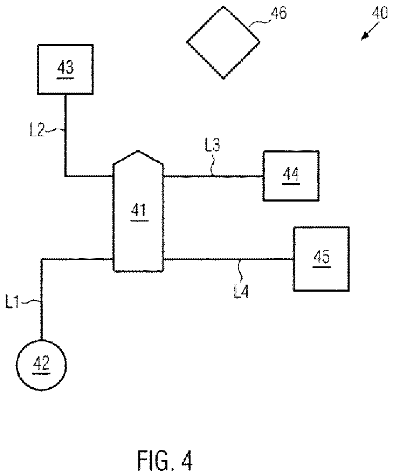

Die in den Figuren 2 und 3 gezeigten Kaltwassertanks 20 und 30 können in der in Figur 4 gezeigten Anlage 40 zur Getränkeherstellung Verwendung finden, und es kann das in Figur 1 veranschaulichte Verfahren in dieser Anlage 40 ausgeführt werden. Die Anlage umfasst einen Kaltwassertank 41 (etwa den in Figur 2 gezeigten Kaltwassertank 20 oder den in Figur 3 gezeigten Kaltwassertank 30). Der Kaltwassertank 41 wird über eine erste Zuleitung L1 von einer Kaltwasserquelle 42 mit Kaltwasser beliefert, das beispielsweise eine Temperatur von maximal 35 °C aufweist.

Über eine zweite Zuleitung L2 erfolgt ein Eintrag an rekuperativer thermischer Energie in das Kaltwasser in einem oberen Teilbereich des Kaltwassertanks 41. Der Eintrag kann durch ein wärmetransportierendes Medium erfolgen, das über einen Wärmetauscher im Kaltwassertank 41 Wärme an das Kaltwasser abgibt. Die Wärme stammt von einer ersten Vorrichtung 43 der Anlage 40. Die Wärme kann beispielsweise aus dem Kondensat eines Pfannendunstkondensators stammen oder Abwärme eines Kompressors (zum Beispiel eines Kältekompressors oder Luftkompressor) oder Klimaanlage sein. Die Wärme kann auch in einem von der ersten Vorrichtung 43 gelieferten Abwasser transportierte Wärme sein. Die erste Vorrichtung kann mehrere Vorrichtungen umfassen, deren jeweils bereitgestellte thermische Energie auf unterschiedliche Weisen (beispielsweise mithilfe verschiedener Wärmetauscher und/oder Wärmepumpen) dem Kaltwassertank 41 zugeführt werden kann. Auch kann der Wärmeeintrag in den Kaltwassertank 41 zumindest teilweise dadurch erfolgen, dass Kaltwasser außerhalb des Kaltwassertanks 41 mithilfe der von der ersten Vorrichtung bereitgestellten thermischen Energie erwärmt und dann in den Kaltwassertank 41 eingeleitet wird. In jedem Fall steht die erste Vorrichtung mit dem Kaltwassertank in energetischer Verbindung hinsichtlich des Transports von thermischer Energie von der ersten Vorrichtung zu dem Kaltwassertank.

Der Kaltwassertank 41 stellt somit in einem ersten (beispielsweise oberen) Teilbereich relativ warmes Kaltwasser und in einem zweiten (beispielsweise unteren) Teilbereich relativ kaltes Kaltwasser (das zusätzlich im Kaltwassertank 41, rekuperativ oder mithilfe einer Kälteanlage, gekühlt werden kann, wie es mit Bezug auf Figur 3 beschrieben wurde, oder außerhalb des Kaltwassertanks 41, beispielsweise mit einer Kälteanlage, gekühlt werden kann) bereit. Das relativ warme Kaltwasser kann aus dem ersten (oberen) Teilbereich des Kaltwassertanks 41 über eine erste Ausleitung L3 einer zweiten Vorrichtung 44, beispielsweise zur Verwendung beim Einmaischen oder Anschwänzen als Einmaischwasser oder Anschwänzwasser oder einer CIP-Einrichtung (Cleaning in Place) als Spül- oder Reinigungswasser, zugeführt werden. Vor Erreichen der zweiten Vorrichtung 44 kann das erwärmte Kaltwasser außerhalb des Kaltwassertanks 41, beispielsweise über einen Wärmetauscher, weiter erwärmt werden (nicht dargestellt). Das relativ kalte Kaltwasser kann aus dem zweiten (unteren) Teilbereich des Kaltwassertanks 41 über eine zweite Ausleitung L4 einer dritten Vorrichtung 45, beispielsweise zur Verwendung für eine Würzekühlung oder zum Bereiten von Eiswasser oder zum Bereiten von entgastem Wasser, zugeführt werden. Die einzelnen Prozessschritte können über eine Steuerungs-/Regeleinrichtung 46 der Anlage 40 zur Getränkeherstellung gesteuert/geregelt werden.

Wie bereits oben erwähnt kann eine Energierückgewinnung aus Abwasser zur Vorwärmung von Wasser in einer Anlage zur Getränkeherstellung, beispielsweise von Frischwasser oder Brauwasser oder Brauchwasser in einer Brauerei, bereitgestellt werden. So kann ein Wärmetauscher oder eine Wärmepumpe in der in Figur 4 gezeigten ersten Ausleitung L3 angebunden sein, um Wärme aus Abwasser an das aus dem oberen Teilbereich des Kaltwassertanks 41 gelieferte, beispielweise erwärmte, Kaltwasser abzugeben und so Wasser zu erwärmen beziehungsweise weiter zu erwärmen. Im Stand der Technik fließen anfallende Abwässer typischerweise ungenutzt ohne Rückgewinnung der in ihnen transportierten thermischen Energie in die Kanalisation. Der Bedarf an Primärenergie und somit der Ausstoß von CO₂ können jedoch bei der Getränkeherstellung durch Gewinnung rekuperativer thermischer Energie aus Abwässern verringert werden. Auch kann verhindert werden, dass unerwünschter Weise zu warmes Abwasser in die Kanalisation oder in die Umwelt, beispielsweise in Flüsse, gerät. Auch aus technischer Sicht ist es sinnvoll das Abwasser zu kühlen, denn teilweise sind die Abwasserrohre aus Kunststoff, was wiederum bedeutet, dass das durchgeleitete Abwasser nicht zu warm sein darf, da ansonsten ungewollte Verbiegungen oder Beschädigungen an den Rohren erfolgen. Allgemein ist es wünschenswert, die thermische Beanspruchung des Abwassersystems zu reduzieren. Es können dadurch gegebenenfalls kostengünstigere Komponenten verwendet werden. Weiterhin kann es sich bei dem Kaltwassertank 41 um einen konventionellen Kaltwassertank handeln, der insbesondere nicht die, oder nicht sämtliche der, mit Bezug auf die Figuren 2 und 3 beschriebenen besonderen Merkmale des erfindungsgemäßen Kaltwassertanks 20 beziehungsweise 30 aufweist.

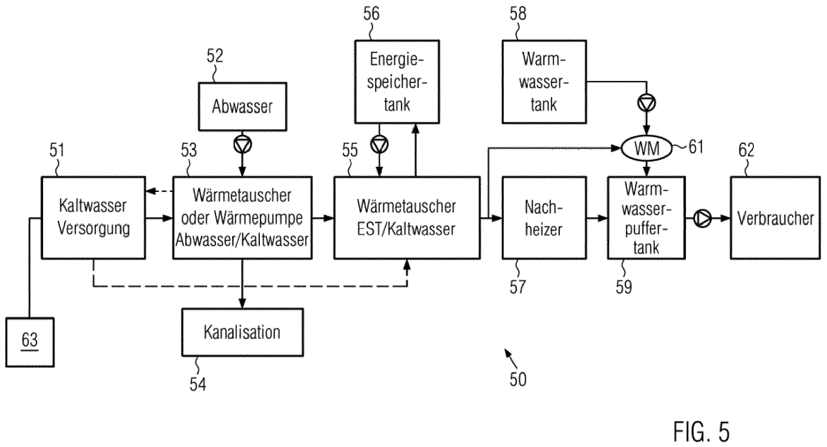

Figur 5 zeigt eine beispielhafte Konfiguration zur Energierückgewinnung aus Abwasser zur Vorwärmung von Wasser in einer Anlage 50 zur Getränkeherstellung, beispielsweise in einer Brauerei.

Die Anlage 50 zur Getränkeherstellung umfasst einen Anschluss von einer Kaltwasserquelle zum Zuführen von Kaltwasser oder einen Kaltwassertank 51 zur Bevorratung von Kaltwasser. Beispielsweise handelt es sich bei dem Kaltwassertank 51 um den in Figur 2 gezeigten Kaltwassertank 20 oder den in Figur 3 gezeigten Kaltwassertank 30. Optional kann eine Einrichtung 63 zum Zuführen eines Kältemediums/Kälteträgermediums, beispielsweise von Bier oder flüssigem CO₂, vorgesehen sein, um Kaltwasser in einem unteren Teilbereich des Kaltwassertanks 51 zu kühlen (siehe Beschreibung der Figur 3). Weiterhin umfasst die Anlage 50 eine Abwasserquelle 52. Von dem Kaltwassertank 51 geliefertes Kaltwasser (beispielsweise bereits im Kaltwassertank 51 wie oben beschrieben rekuperativ erwärmtes Kaltwasser) kann mithilfe eines Wärmetauschers oder einer Wärmepumpe 53 durch Übertragung von Wärme des Abwassers auf das Kaltwasser erwärmt werden. Das Abwasser kann dem Wärmetauscher oder der Wärmepumpe 53 über eine thermisch isolierte Leitung oder thermisch isolierte Abwasserkanäle zugeführt werden. Auch können diese Abwässer vor einer Rekuperation gesammelt und vorgehalten werden, so kann auch eine gleichmäßigere Rekuperation, durch konstante Flüsse, bewerkstelligt werden. Sodass Energie nicht unnötigerweise in die Umgebung beziehungsweise Atmosphäre gelangt und so nicht mehr zur Energierückgewinnung zur Verfügung steht ist es vorteilhaft, wenn alle Leitungen bzw. möglichst viele Leitungen bis zur Energierückgewinnung thermisch isoliert werden, so kann noch eine höhere Energierückgewinnungseffizienz geschaffen werden. Das in dem Wärmetauscher oder der Wärmepumpe 53 abgekühlte Abwasser wird der Kanalisation 54 zugeleitet.

Die Anlage umfasst weiterhin eine optionale Nachheizeinrichtung 57 (welche zum Beispiel mit Primärenergie, zum Beispiel mit Dampf versorgt wird) und eine Verbrauchervorrichtung 62. Die Verbrauchervorrichtung 62 kann die oben beschriebene zweite Vorrichtung sein oder diese umfassen. Optional können ein weiterer Wärmetauscher 55, ein Energiespeichertank 56, ein Warmwassertank 58, ein Warmwasserpuffertank 59 und/oder eine Mischeinrichtung 61 vorgesehen sein. Um möglichst der Verbrauchervorrichtung 62 Wasser mit der geforderten Temperatur zuführen zu können, sollte entweder der Wärmetauscher 55, welcher mit dem Energiespeichertank 56 verbunden ist, oder eine Nachheizeinrichtung 57 vorhanden sein. Es können selbstverständlich sowohl Wärmetauscher 55 wie auch die Nachheizeinrichtung 57 vorhanden sein. Die Aufheizung des Wassers mit rekuperativer Energie (also mithilfe des Wärmetauschers 55 und des Energiespeichertank 56) ist der Aufheizung mit Primärenergie (also zum Beispiel mit der Nachheizeinrichtung 57) hinsichtlich Energieeffizienz zu bevorzugen.

Wenn die Verbrauchervorrichtung 62 Warmwasser anfordert, dann kann dieses von dem optionalen Warmwasserpuffertank 59 insbesondere mithilfe einer Pumpe geliefert werden. Wird ein vorbestimmter minimaler Füllstand im Warmwasserpuffertank 59 unterschritten, fordert der Warmwasserpuffertank 59 neues Warmwasser an. Ist kein Warmwasserpuffertank 59 vorhanden, so wird von der Verbrauchervorrichtung 62 neues Warmwasser aus dem optionalen Warmwassertank 58 oder der Nachheizeinrichtung 57 angefordert. Verfügt der Warmwassertank 58 über genügend Warmwasser, dann liefert er Warmwasser. Dieses Warmwasser wird der optionalen Mischeinrichtung 61 mit dem durch den Wärmetauscher oder die Wärmepumpe 53 vorgewärmten von dem Kaltwassertank 51 gelieferten Kaltwasser auf die Zieltemperatur ausgemischt und dann in den optionalen Warmwasserpuffertank 59 oder direkt zur Verbrauchervorrichtung 62 gefördert.

Sollte der Warmwassertank 58 nicht ausreichend Warmwasser liefern können, dann wird Kaltwasser von einer Kaltwasserquelle oder dem Kaltwassertank 51 angefordert, das zur Vorwärmung den Wärmetauscher oder die Wärmepumpe 53 passiert. Das in dem Wärmetauscher oder der Wärmepumpe 53 vorgewärmte Kaltwasser passiert dann den optionalen Wärmetauscher 55. Sollte im optionalen Energiespeichertank 56 eine bestimmte Energiemenge vorhanden sein oder ein Energieüberschuss vorliegen, so liefert der Energiespeichertank 56 dem Wärmetauscher 55 thermische Energie, um das vorgewärmte Kaltwasser auf eine bestimmte Temperatur oder auf die von der Verbrauchervorrichtung 62 vorgegebene Zieltemperatur zu erwärmen. Insbesondere wenn im Energiespeichertank 56 ein Energieüberschuss vorliegt und der Warmwassertank 58 noch Wasser aufnehmen kann, kann es sinnvoll sein im Warmwassertank 58 Warmwasser zu bevorraten. Dieses Warmwasser kann dann eine etwas höhere Temperatur aufweisen als es für die Verbrauchervorrichtung 62 notwendig ist.

Das im optionalen Wärmetauscher 55 erwärmte Wasser kann direkt der Verbrauchervorrichtung 62 oder wie erwähnt einem optionalen Warmwassertank 58 und/oder einer optionalen Nachheizeinrichtung 57 und/oder einem optionalen Warmwasserpuffertank 59 und/oder einer optionalen Mischeinrichtung 61 zugeführt werden. Kann der Energiespeichertank 56 nicht ausreichend Energie liefern, um das Wasser auf die Zieltemperatur zu erwärmen, beziehungsweise ist der Energiespeichertank 56 nicht vorhanden, so erfolgt die bedarfsgemäße Erwärmung des Wassers durch die Nachheizeinrichtung 57. Von der Nachheizeinrichtung 57 kann das erwärmte Wasser direkt der Verbrauchervorrichtung 62 oder über einen optionalen Warmwasserpuffertank 59, und/oder optionalen Mischeinrichtung 61 und/oder dem optionalen Warmwassertank 58 zur Zwischenspeicherung zugeführt werden.

Ein optional vorhandener Warmwasserpuffertank 59 ist besonders vorteilhaft, wenn dem Wasser Zusätze zugegeben werden oder das Wasser mit einem anderen Wasser mit verschiedener Wasserqualität gemischt werden soll. In dem Warmwasserpuffertank können geeignete Mischvorrichtungen vorhanden sein (nicht dargestellt).

In dem bisher mit Bezug auf die Figur 5 beschriebenen Szenario, wird das aus dem beispielsweise vorhandenen Kaltwassertank 51 oder einer Kaltwasserquelle gelieferte Kaltwasser mithilfe der Wärme des Abwassers, das von der Abwasserquelle 52 geliefert wird, in dem Wärmetauscher oder der Wärmepumpe 53 vorgewärmt.

Die Wärme des Abwassers kann aber zusätzlich teilweise oder alternativ zur Erwärmung eines Teils des Kaltwassers, das in einem Teilbereich des Kaltwassertanks 51 gespeichert ist, verwendet werden beziehungsweise als erwärmtes Kaltwasser in einen Teilbereich des Kaltwassertanks 51 geliefert werden und als bereits relativ warmes Kaltwasser direkt an den optionalen Wärmetauscher 55 (siehe gestrichelte Pfeile in der Figur 5) beziehungsweise die Nachheizeinrichtung 57 geliefert werden. In jedem Fall geht die Wärme des Abwassers nicht verloren, sondern kann zur Vorerwärmung von Kaltwasser genutzt werden.

## Patentansprüche

1. Verfahren zur Energierückgewinnung in einer Anlage (40, 50) zur Getränkeherstellung, mit den Schritten:
Leiten eines ersten Mediums mit einer ersten Temperatur in einen Kaltwassertank (20, 30, 41, 51), wobei die erste Temperatur maximal 35 °C beträgt;
Rückgewinnen thermischer Energie von einer ersten Vorrichtung (43) der Anlage (40, 50) zur Getränkeherstellung; und
Zuführen der rückgewonnenen thermischen Energie zu lediglich einem ersten Teilbereich des Kaltwassertanks (20, 30, 41, 51), derart dass in diesem ersten Teilbereich ein zweites Medium mit einer zweiten Temperatur, die von der ersten Temperatur verschiedenen ist, insbesondere ein gegenüber dem ersten Medium erwärmtes zweites Medium mit einer zweiten Temperatur oberhalb der ersten Temperatur, bereitgestellt wird, wobei die zweite Temperatur maximal 50 °C beträgt.

2. Das Verfahren gemäß Anspruch 1, in dem die rückgewonnene thermische Energie dem ersten Teilbereich des Kaltwassertanks (20, 30, 41, 51) in Form von Wärme zugeführt wird und das zweite Medium ein Teil des mithilfe der zugeführten Wärme erwärmten ersten Mediums ist.

3. Das Verfahren gemäß Anspruch 1, in dem die rückgewonnene thermische Energie dem ersten Teilbereich des Kaltwassertanks (20, 30, 41, 51) in dem zweiten Medium zugeführt wird.

4. Das Verfahren gemäß einem der vorhergehenden Ansprüche, weiterhin mit Ausleiten des zweiten Mediums aus einem ersten Auslass (22, 32) des ersten Teilbereichs des Kaltwassertanks (20, 30, 41, 51) und Zuführen des ausgeleiteten zweiten Mediums zu einer zweiten Vorrichtung (44) der Anlage (40, 50) zur Getränkeherstellung, die von der ersten Vorrichtung (43) verschieden ist.

5. Das Verfahren gemäß Anspruch 4, weiterhin mit Ausleiten des ersten Mediums aus einem zweiten Auslass (23, 33) eines zweiten Teilbereichs des Kaltwassertanks (20, 30, 41, 51), der von dem ersten Teilbereich verschieden ist, und Zuführen des ausgeleiteten ersten Mediums zu einer dritten Vorrichtung (45) der Anlage (40, 50) zur Getränkeherstellung, die von der ersten Vorrichtung (43) und der zweiten Vorrichtung (44) verschieden ist, wobei die dritte Vorrichtung insbesondere ein Würzekühler, eine Einrichtung zum Bereitstellen von Eiswasser oder eine Einrichtung zum Entgasen von Wasser ist.

6. Das Verfahren gemäß einem der vorhergehenden Ansprüche, in dem die rückgewonnene thermische Energie dem ersten Teilbereich des Kaltwassertanks (20, 30, 41, 51) über eine Wärmepumpe (53) oder einen Wärmetauscher (25, 35, 53) zugeführt wird.

7. Das Verfahren gemäß Anspruch 6, in dem die rückgewonnene thermische Energie dem ersten Teilbereich des Kaltwassertanks (20, 30, 41, 51) über einen Wärmetauscher (25, 35) zugeführt wird, der in oder an dem Kaltwassertank vorgesehen ist.

8. Das Verfahren gemäß einem der vorhergehenden Ansprüche, weiterhin mit
a) Kühlen des ersten Mediums außerhalb des Kaltwassertanks (20, 30, 41, 51), insbesondere mithilfe einer Kälteanlage oder mithilfe von Bier, oder
b) Abkühlen des ersten Mediums in dem zweiten Teilbereich, insbesondere nur in dem zweiten Teilbereich, des Kaltwassertanks (20, 30, 41, 51), insbesondere i) durch Leiten von einem Kältemedium/Kälteträgermedium, beispielsweise von flüssigem CO₂ oder einem Getränk, beispielsweise Bier, durch eine in dem zweiten Teilbereich des Kaltwassertanks (20, 30, 41, 51) angeordnete Leitung (38) oder ii) mithilfe einer Kälteanlage.

9. Das Verfahren gemäß einem der vorhergehenden Ansprüche, wobei die Anlage (40, 50) zur Getränkeherstellung eine Brauerei ist, und die erste Vorrichtung (43) ein Pfannendunstkondensator oder ein Kompressor, Kältekompressor, Luftkompressor oder eine Klimaanlage ist und das erste Medium Frischwasser oder Brauwasser oder Brauchwasser ist.

10. Das Verfahren gemäß einem der Ansprüche 1 bis 9, wobei die rückgewonnene thermische Energie aus Abwasser rückgewonnen wird.

11. Anlage (40, 50) zur Getränkeherstellung, insbesondere Bierherstellung, mit
einem Kaltwassertank (20, 30, 41, 51);
einer Wärmerückgewinnungseinrichtung (25, 35, 53) zur Rückgewinnung thermischer Energie; und
einer Steuerungs-/Regeleinrichtung (46), die dazu ausgebildet ist, das Verfahren gemäß einem der vorhergehenden Ansprüche auszuführen.

12. Anlage (40, 50) zur Bierherstellung, mit
einem Kaltwassertank (20, 30, 41, 51) mit einem ersten Teilbereich und einem zweiten Teilbereich, der von dem ersten Teilbereich verschieden ist, zum Speichern von Kaltwasser mit einer ersten Temperatur von maximal 35 °C in dem zweiten Teilbereich des Kaltwassertanks (20, 30, 41, 51) und zum Speichern von Kaltwasser mit einer zweiten Temperatur, die von der ersten Temperatur verschieden ist, insbesondere größer als die erste Temperatur ist, in dem ersten Teilbereich des Kaltwassertanks (20, 30, 41, 51); und
einer Wärmerückgewinnungseinrichtung (25, 35, 53) zur Rückgewinnung thermischer Energie von einer ersten Vorrichtung (43) der Anlage (40, 50) zur Bierherstellung, wobei die Wärmerückgewinnungseinrichtung (25, 35, 53) lediglich mit dem ersten Teilbereich des Kaltwassertanks (20, 30, 41, 51) verbunden ist, und insbesondere die erste Vorrichtung (43) ein Pfannendunstkondensator oder ein Kompressor, insbesondere ein Kältekompressor oder ein Luftkompressor, oder eine Klimaanlage ist oder insbesondere die erste Vorrichtung (43) ein Abwasser bereitstellt, aus dem die thermische Energie rückgewonnen wird.

13. Die Anlage (40, 50) gemäß Anspruch 12, in der der Kaltwassertank (20, 30, 41, 51) in dem ersten Teilbereich einen ersten Auslass (22, 32) zum Ausleiten des Kaltwassers aus dem ersten Teilbereich und einen zweiten Auslass (23, 33) zum Ausleiten des Kaltwassers aus dem zweiten Teilbereich und einen von dem ersten Auslass (22, 32) und dem zweiten Auslass (23, 33) verschiedenen Einlass (21, 31) zum Einleiten des Kaltwassers umfasst.

14. Die Anlage (40, 50) gemäß Anspruch 12 oder 13, in der der Kaltwassertank (20, 30, 41, 51) einen Wärmetauscher (25, 35) außerhalb oder innerhalb eines den ersten Teilbereich umgebenden Wandbereichs des Kaltwassertanks (20, 30, 41, 51) umfasst.

15. Die Anlage (40, 50) gemäß einem der Ansprüche 12 bis 14, weiterhin mit
a) einer Kälteanlage zum Kühlen des in dem Kaltwassertank (20, 30, 41, 51) zu speichernden Kaltwassers außerhalb des Kaltwassertanks (20, 30, 41, 51) und/oder eine Kälteanlage zum Kühlen des Kaltwassers in dem zweiten Teilbereich des Kaltwassertanks (20, 30, 41, 51); oder
b) einer Einrichtung (63) zum Zuführen von flüssigem CO₂ oder Bier, wobei der Kaltwassertank (20, 30, 41, 51) eine in dem zweiten Teilbereich angeordnete Leitung (36) umfasst, die mit der Einrichtung (63) zum Zuführen von flüssigem CO₂ oder Bier verbunden ist.
